(19) Europäisches Patentamt
European Patent Office
Office européen des brevets

(11) Veröffentlichungsnummer: **0 167 998 B1**

(12) **EUROPÄISCHE PATENTSCHRIFT**

(45) Veröffentlichungstag der Patentschrift: **10.10.90**

(21) Anmeldenummer: **85108323.8**

(22) Anmeldetag: **05.07.85**

(51) Int. Cl.⁵: **C 09 B 11/12,** D 06 P 1/42, D 21 H 21/28

# (54) Rhodaminfarbstoffe.

(30) Priorität: **12.07.84 DE 3425631**

(43) Veröffentlichungstag der Anmeldung: **15.01.86 Patentblatt 86/03**

(45) Bekanntmachung des Hinweises auf die Patenterteilung: **10.10.90 Patentblatt 90/41**

(84) Benannte Vertragsstaaten: **CH DE FR GB IT LI**

(56) Entgegenhaltungen:
**FR-A-2 214 009**
**GB-A-1 407 331**
**GB-A-1 409 493**
**GB-A-1 445 989**

(73) Patentinhaber: **BASF Aktiengesellschaft**
**Carl-Bosch-Strasse 38**
**D-6700 Ludwigshafen (DE)**

(72) Erfinder: **Mayer, Udo, Dr.**
**Max-Slevogt-Strasse 27**
**D-6710 Frankenthal (DE)**
Erfinder: **Oberlinner, Andreas, Dr.**
**Bruesseler Ring 53**
**D-6700 Ludwigshafen (DE)**

**EP 0 167 998 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft Verbindungen der Formel I

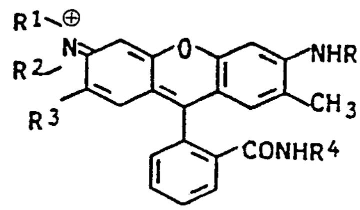

$A^{\ominus}$ (I),

in der

R $C_1$- bis $C_4$-Alkyl,
$R^1$ Wasserstoff oder $C_1$— bis $C_4$-Alkyl,
$R^2$ $C_1$- bis $C_4$-Alkyl oder Cyclohexyl,
$R^1$ und $R^2$ zusammen mit dem Stickstoff einen gesättigten Heterocyclus,
$R^3$ Wasserstoff oder Methyl,
$R^4$ gegebenenfalls substituiertes Alkyl oder Cycloalkyl und
$A^{\ominus}$ ein Anion bedeuten.

Gegebenenfalls substituierte Alkyl- oder Cycloalkylreste $R^4$ sind beispielsweise $C_1$- bis $C_{13}$-Alkyl, das noch durch Hydroxy, $C_1$- bis $C_{13}$-Alkoxy, Chlor, Cyan, Phenyl, Tolyl, Chlorphenyl oder Methoxyphenyl substituiert und durch Sauerstoff unterbrochen sein kann sowie durch $C_1$- bis $C_4$-Alkyl substituiertes Cycloalkyl. Im einzelnen seien beispielsweise genannt:

$CH_3$, $C_2H_5$, $C_3H_7$, $C_4H_9$, $C_5H_{11}$, $C_6H_{13}$, $C_8H_{17}$, $C_{10}H_{21}$, $C_{12}H_{23}$, $C_{13}H_{25}$,

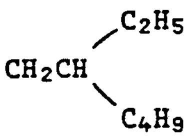

, $C_2H_4OH$, $C_3H_6OH$, $C_2H_4OCH_3$, $C_2H_4OC_2H_5$, $C_2H_4OC_3H_7$, $C_2H_4OC_4H_9$,

$C_3H_6OCH_3$, $C_3H_6OC_4H_9$, $C_2H_4OC_2H_4OCH_3$, $C_2H_4OC_2H_4OC_2H_5$, $C_2H_4OC_2H_4OC_4H_9$,
$CH(CH_3)CH_2OC_2H_4OCH_3$, $CH_2CH_2Cl$, $C_2H_4CN$, $CH_2C_6H_5$, $C_2H_4C_6H_5$, $CH_2C_6H_4CH_3$,
$CH_2C_6H_4Cl$, $CH_2C_6H_4OCH_3$, $CH_2C_6H_3(CH_3)_2$,

Cyclopentyl, Cyclohexyl oder Methylcyclohexyl. Die Summenformeln umfassen dabei die n- und i-Reste.

Als Reste $R^4$ sind darüberhinaus noch folgende zu nennen:

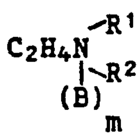

,

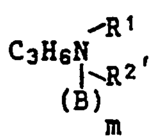

,

alkylen-Z-alkylen-$B^1$ oder gegebenenfalls substituiertes Phenyl oder Naphthyl, wobei
m die Zahlen 0 oder 1,
B Wasserstoff oder gegebenenfalls substituiertes Alkyl,
Z O, S oder

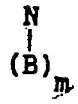

und
$B^1$ Alkoxy oder

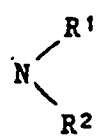

bedeuten.

Reste B sind neben Wasserstoff z.B.:

$CH_3$, $C_2H_5$, $CH_2C_6H_5$, $C_2H_4OH$ oder $C_3H_6OH$.

Einzelne Reste neben den bereits für $R^4$ genannten sind beispielsweise:

$C_2H_4NH_2$, $C_3H_6NH_2$, 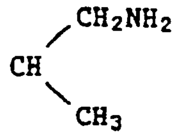, $C_3H_6NHCH_3$, $C_2H_4N(CH_3)_2$, $C_2H_4N(C_2H_5)_2$,

$C_2H_4N(C_3H_7)_2$, $C_2H_4N(C_4H_9)_2$, $C_3H_6N(C_2H_5)_2$, $C_2H_4\overset{\oplus}{N}(CH_3)_3$, $C_3H_6\overset{\oplus}{N}(CH_3)_3$,

$C_3H_6OC_3H_6NH_2$, $C_3H_6OC_3H_6N(CH_3)_2$, $C_2H_4NHC_2H_4NH_2$ oder $C_3H_6NHC_3H_6NH_2$.

Unter Anion $A^{\ominus}$ sind sowohl organische wie anorganische Ionen zu verstehen, z.B. seien Chlorid, Bromid, Sulfat, Bisulfat, Methylsulfat, Aminosulfonat, Perchlorat, Benzolsulfonat, Oxalat, Maleinat, Acetat, Hydroxyacetat, Methoxyacetat, Propionat, Lactat, Succinat, Tartrat oder Methansulfonat genannt.

Zur Herstellung der Verbindungen der Formel I kann man Verbindungen der Formeln

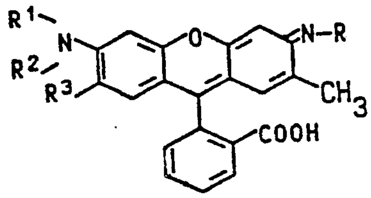

oder

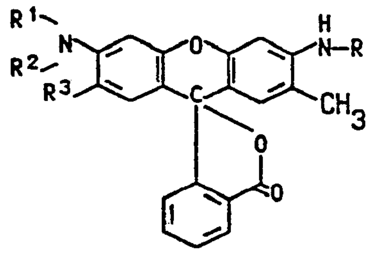

in die Amide überführen. Einzelheiten der Herstellung können den Beispielen entnommen werden, in denen sich Angaben über Teile und Prozente, sofern nicht anders vermerkt, auf das Gewicht beziehen.

Die Verbindungen der Formel I eignen sich zum Färben von anionisch modifizierten Fasern, für die Herstellung von Druckpasten und Drucktinten, zum Färben von Leder und Kunststoffen sowie insbesondere für Papierstoffe. Überraschenderweise können damit auch gebleichte (holzfreie oder holzarme) Zellstoffe in brillanten Rottönen gefärbt werden. Die Baderschöpfung ist vergleichsweise sehr hoch.

Besonders bevorzugt sind für

R: $C_2H_5$,

$R^1$: H, $CH_3$ oder $C_2H_5$,

$R^2$: $CH_3$, $C_2H_5$ oder $C_6H_{11}$,

$R^4$: verzweigtes Alkyl mit 3 bis 13 C-Atomen, z.B.

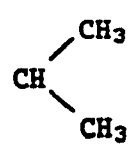, 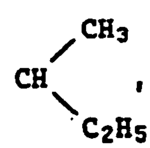,

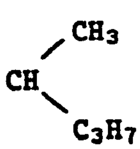, 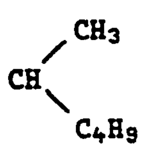, 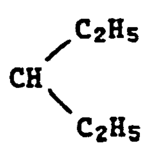, $CH(CH_3)C_2H_4CH(CH_3)_2$, $CH(CH_3)C_3H_6CH(CH_3)_2$

oder 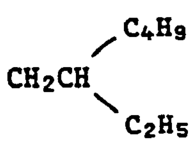

sowie gegebenenfalls durch Hydroxy oder $C_1$- bis $C_4$-Alkyl substituiertes $C_5$- bis $C_7$-Cycloalkyl.

Aus der GB—A—1 445 989 sind ebenfalls Rhodaminfarbstoffe mit Amidstruktur bekannt, die sich jedoch in vielen Parametern von den erfindungsgemäßen Verbindungen unterscheiden.

Beispiel 1

8,28 Teile des als Base vorliegenden Rhodamin-Farbstoffes der Formel I und 2,35 Teile Benzylamin werden in 50 Raumteile Chlorbenzol eingetragen. Man läßt im Verlauf von ca. 15 Minuten 3,06 Teile Phosphoroxytrichlorid zulaufen, wobei die Temperatur auf ungefähr 50°C ansteigt. Das Reaktionsgemisch wird erhitzt und 3 Stunden unter Rückfluß gehalten.

Nach Zugabe von 100 Teilen Wasser wird solange destilliert, bis kein Chlorbenzol mehr übergeht. Danach gibt man 25 Teile einer 10 %igen Natronlauge zu und läßt den Ansatz unter Rühren abkühlen. Dabei erhält man ein kristallines Produkt der Formel II, das abgesaugt, mit Wasser gewaschen und bei 60°C getrocknet wird. Die Ausbeute beträgt 8,5 Teile.

Die gleichen Ergebnisse werden erhalten, wenn man anstelle von Chlorbenzol Chloroform, 1,2-Dichlorethan, Trichlorethylen, Toluol, Xylol oder Dichlorbenzol und anstelle von $POCl_3$ äquimolare Mengen von $PCl_3$ oder $PCl_5$ verwendet.

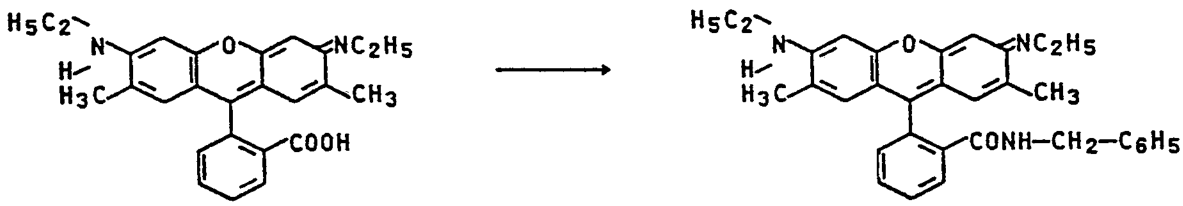

I II

Die Farbbase der Formel II löst sich in verdünnter Essigsäure unter Bildung des Quartärsalzes mit Acetat als Anion.

Beispiel 2

8,28 Teile der Farbbase der Formel I (s. Beispiel 1) und 1,5 Teile Methylammoniumchlorid werden in 50 Raumteilen 1,2-Dichlorethan in Gegenwart von 3,06 Teilen Phosphoroxytrichlorid in 5 Stunden bei Rückflußtemperatur umgesetzt. Das Reaktionsgemisch wird analog Beispiel 1 aufgearbeitet, wobei 8,0 Teile der Farbbase der Formel III mit $R_1 = H$, $R_2 = CH_3$ erhalten werden:

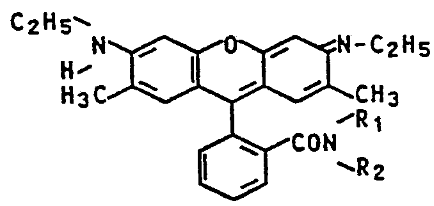

III

Nach der in Beispiel 2 angegebenen Verfahrensweise wurden auch die in der Tabelle gekennzeichneten Farbstoffe der Formel III gewonnen, wobei anstelle von Methylammoniumchlorid

Ethylammoniumchlorid, Dimethylammoniumchlorid bzw. Diethylammoniumchlorid oder die entsprechenden Amine $R_2NH_2$ verwendet wurden:

| Beispiel | $R_1$ | $R_2$ | λ max. (nm) |
|---|---|---|---|
| 3 | H | $C_2H_5$ | 534 |
| 4 | H | $nC_3H_7$ | 534 |
| 5 | H | 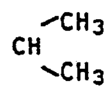 | 534 |
| 6 | H | $nC_4H_9$ | 534 |
| 7 | H | 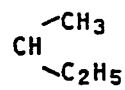 | 534 |
| 8 | H | 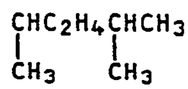 | 534 |
| 9 | H | 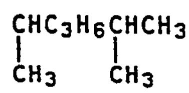 | 532 |
| 10 | H | 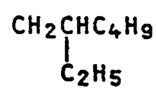 | 534 |
| 11 | H | $CH_2C_6H_5$ | 534 |
| 12 | H | $C_2H_4C_6H_5$ | 534 |
| 13 | H | $C_6H_5$ | 530,5 |
| 14 | H | $C_6H_{12}$ | 534 |
| 15 | H | $C_2H_4OCH_3$ | 533,5 |
| 16 | H | $C_3H_6OCH_3$ | 534 |
| 17 | H | $C_3H_6OC_2H_5$ | 534 |
| 18 | H | 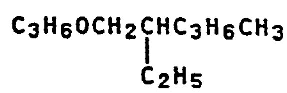 | 534 |
| 19 | H | $C_3H_6N(CH_3)_2$ | 533,5 |
| 20 | H | 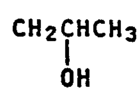 | 533 |

Beispiel 21

7,8 Teile der Rhodamin-Farbbase der Formel IV mit $R_3$ = $N(CH_3)_2$ wurden analog Beispiel 1 in 50 Raumteilen 1,2-Dichlorethan mit 1,6 Teilen n-Butylamin in Gegenwart von 3,06 Teilen

Phosphoroxytrichlorid umgesetzt. Dabei wurden 6 Teile der Farbbase V mit $R_3$ = $N(CH_3)_2$ und $R_4$ = n-$C_4H_9$ erhalten (λ max.: 541 nm).

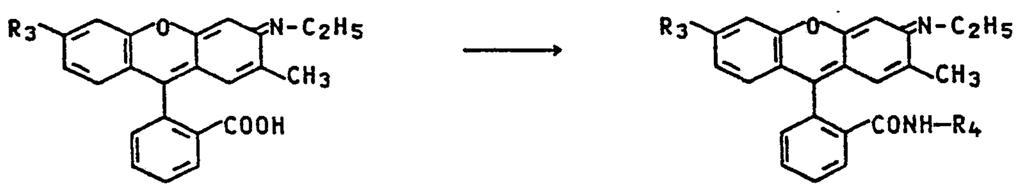

IV V

Die Verbindung der Formel IV mit $R_3$ = $N(CH_3)_2$ kann wie folgt hergestellt werden:

57 Teile 2-(2'-Hydroxy-4-dimethylamino-benzoyl)-benzoesäure der Formel VI, die nach einem üblichen Verfahren aus m-Dimethylaminophenol und Phthalsäureanhydrid hergestellt worden ist, werden bei Raumtemperatur in 410 Teilen 96 %iger Schwefelsäure gelöst. Nach Zugabe von 30,2 Teilen 3-Ethylaminop-kresol der Formel VII wird der Ansatz erhitzt und 3 Stunden bei 50°C gehalten. Das Reaktionsgemisch wird auf 1100 Teile Eiswasser ausgetragen. Der kristalline Niederschlag wird abgesaugt und mit 200 Teilen Wasser gewaschen. Anschließend wird er in 400 Teilen Wasser bei ca. 70°C gelöst. Die Lösung wird mit Natronlauge auf einen pH-Wert von 11 gestellt, wobei sich die Farbbase der Formel VIII kristallin abscheidet. Das Produkt wird abgesaugt, mit Wasser gewaschen und bei 60°C getrocknet. Die Ausbeute beträgt 52 Teile.

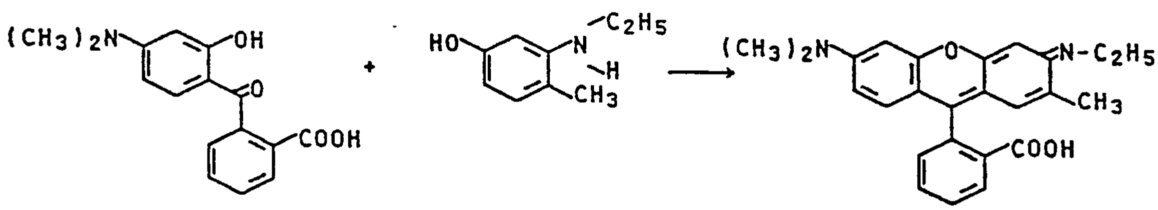

VI VII VIII

Nach der gleichen Verfahrensweise wurden die in der Tabelle beschriebenen Farbstoffe der Formel V gewonnen:

| Beispiel | $R_3$ | $R_4$ | λ max. (nm) |
|---|---|---|---|
| 22 | $N(CH_3)_2$ | $CH_2C_6H_5$ | 542,5 |
| 23 | $N(CH_3)_2$ | $C_2H_4C_6H_5$ | 541 |
| 24 | $N(C_2H_5)_2$ | n–$C_4H_9$ | 546 |
| 25 | $N(C_2H_5)_2$ | $CH_2C_6H_5$ | 549,5 |
| 26 | $N(C_2H_5)_2$ | $C_2H_4C_6H_5$ | 547 |

**Patentansprüche**

1. Verbindungen der Formel I

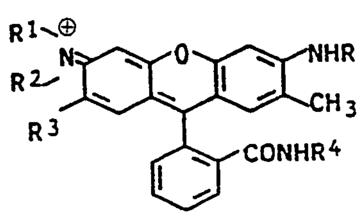

$A^{\ominus}$ (I),

in der

R $C_1$- bis $C_4$-Alkyl,

$R^1$ Wasserstoff oder $C_1$— bis $C_4$-Alkyl,
$R^2$ $C_1$- bis $C_4$-Alkyl oder Cyclohexyl,
$R^1$ und $R^2$ zusammen mit dem Stickstoff einen gesättigten Heterocyclus,
$R^3$ Wasserstoff oder Methyl,
$R^4$ gegebenenfalls substituiertes Alkyl oder Cycloalkyl und
$A^{\ominus}$ ein Anion bedeuten.

2. Verbindungen gemäß Anspruch 1, wobei
R $C_2H_5$,
$R^1$ H, $CH_3$ oder $C_2H_5$,
$R^2$ $CH_3$, $C_2H_5$ oder $C_6H_{11}$ und
$R^4$ verzweigtes Alkyl mit 3 bis 13 C-Atomen oder gegebenenfalls durch Hydroxy oder $C_1$- bis $C_4$-Alkyl substituiertes $C_5$- bis $C_7$-Cycloalkyl sind.

3. Verwendung der Verbindungen gemäß Anspruch 1 zum Färben von Papierstoffen.

**Revendications**

1. Composés de la formule I

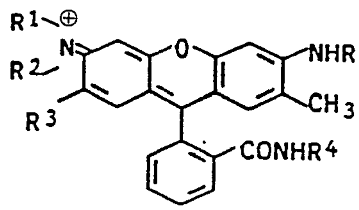

$A^{\ominus}$ (I),

dans laquelle
R représente alkyle en $C_1$ à $C_4$
$R^1$, hydrogène ou alkyle en $C_1$ à $C_4$
$R^2$, alkyle en $C_1$ à $C_4$ ou cyclohexyle
$R^1$ et $R^2$, ensemble avec l'azote un hétérocycle saturé
$R^3$, hydrogène ou méthyle
$R^4$, alkyle éventuellement substitué ou cycloalkyle, et
$A^{\ominus}$, un anion.

2. Composés selon la revendication 1, où
R est $C_2H_5$
$R^1$, H, $CH_3$ ou $C_2H_5$
$R^2$, $CH_3$, $C_2H_5$ ou $C_6H_{11}$ et
$R^4$, alkyle ramifié ayant 3 à 13 atomes C ou cycloalkyle en $C_5$ à $C_7$ éventuellement substitué par hydroxy ou alkyle en $C_1$ à $C_4$.

3. Utilisation des composés selon la revendication 1 pour la teinture des papiers.

**Claims**

1. A compound of the formula I

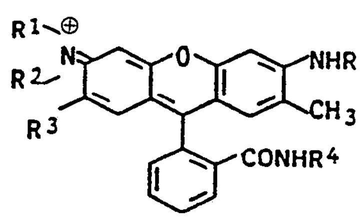

$A^{\ominus}$ (I),

wherein R is $C_1$—$C_4$-alkyl, $R^1$ is hydrogen or $C_1$—$C_4$-alkyl, $R^2$ is $C_1$—$_4$-alkyl or cyclohexyl, $R^1$ and $R^2$, together with the nitrogen, form a saturated heterocycle, $R^3$ is hydrogen or methyl, $R^4$ is substituted or unsubstituted alkyl or cycloalkyl, and $A^{\ominus}$ is an anion.

2. A compound as claimed in claim 1, wherein R is $C_2H_5$, $R^1$ is H, $CH_3$ or $C_2H_5$, $R^2$ is $CH_3$, $C_2H_5$ or $C_6H_{11}$, and $R^4$ is branched alkyl of 3 to 13 carbon atoms or is $C_5$—$C_7$-cycloalkyl which may be substituted by hydroxyl or $C_1$—$C_4$-alkyl.

3. Use of a compound as claimed in claim 1 for dyeing paper stock.